# EUROPÄISCHE PATENTANMELDUNG

(11) **EP 1 894 821 A1**
(43) Veröffentlichungstag der Anmeldung: **05.03.2008**
(21) Anmeldenummer: 07015925.6
(22) Anmeldetag: 14.08.2007
(51) Int. Cl.: B62D 55/24, B62D 55/14, B62D 55/26

(54) **Traverse**

(30) Priorität: 01.09.2006 DE 202006013452 U
(71) Anmelder: B.A.G. Baumaschinen-Anlagen-Geräte Vertriebsgesell, 51688 Wipperfürth (DE)
(72) Erfinder: Sha, Ma, 51643 Gummersbach (DE); Fritsch, Peter, 51688 Wipperfürth (DE)
(74) Vertreter: Draudt, Axel Hermann Christian

(57) **Zusammenfassung**

Die Erfindung betrifft eine Traverse (10) für eine Gummibandfahrkette, mit einem sich längs der Traverse (10) erstreckenden Abschnitt (12), der von einem Paar quer zu der Traverse (10) angeordneten Schienenstücken (14) begrenzt ist, welche erste (16) und zweite Stirnflächen (18) aufweisen, von denen mindestens eine außerhalb des Längsrandes der Traverse (10) angeordnet ist.

Um eine Traverse der eingangs genannten Art so zu verbessern, dass ein möglichst erschütterungsfreies Fahren mit einer damit versehenen Gummikette ermöglicht wird, wird sie so ausgebildet, dass die ersten und zweiten Stirnflächen (16,18) jeweils mindestens eine ebene Fläche aufweisen, deren Flächennormale (20) quer zur Bewegungsrichtung (22) der Gummibandfahrkette verläuft.

## Beschreibung

Die Erfindung betrifft eine Traverse für eine Gummibandfahrkette, mit einem sich längs der Traverse erstreckenden Abschnitt, der von einem Paar quer zu der Traverse angeordneten Schienenstücken begrenzt ist, welche erste und zweite Stirnflächen aufweisen, von denen mindestens eine außerhalb des Längsrandes der Traverse angeordnet ist.

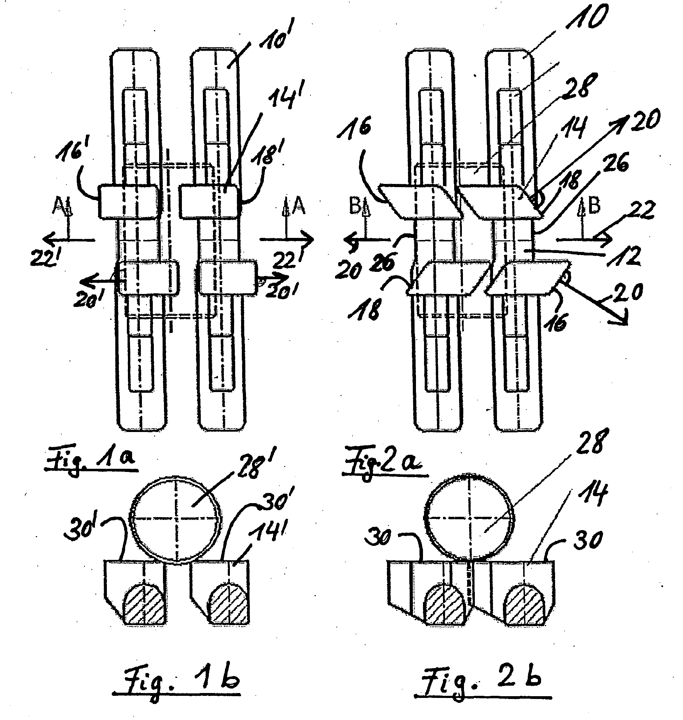

Ein Beispiel einer derartigen Traverse ist in den Figuren 1a und 1b dargestellt. Aus Übersichtlichkeitsgründen wurden zwar die gleichen Bezugsziffern wie für die Erfindung verwandt, allerdings zur Unterscheidung mit einem ' versehen.

Bei den in den Figur 1a und 1b gezeigten Traversen 10' sind die Schienenstücke 14' derart ausgebildet, dass sie in Draufsicht auf Figur 1a gesehen einen rechteckförmigen Querschnitt aufweisen. Jedes Schienenstück 14' hat eine erste Stirnfläche 16' sowie eine zweite Stirnfläche 18', die bei zwei nebeneinander angeordneten Traversen 10' entsprechend auf einander zu ausgerichtet sind.

Wie deutlich in Figur 1a zu erkennen, verlaufen die ersten und zweiten Stirnflächen 16' und 18' der Schienenstücke 14' in etwa senkrecht zu einer Bewegungsrichtung 22'. Da ein mit dieser Gummikette versehenes Fahrzeug sowohl vorwärts als auch rückwärts fahren kann, sind selbstverständlich beide Bewegungsrichtungen angegeben und mit 22' bezeichnet.

Da die fertig montierten Ketten über Rollen 28' geführt werden, die sich auf in Figur 1b nach oben gerichteten Flächen 30' der Schienenstücke 14' abstützen, muss die Rolle 28' eine Lücke überbrücken, die zwischen einander benachbarten Schienenstücken 14', wie in Figur 1a und 1b deutlich zu sehen, vorhanden ist.

Dabei ist aus Figur 1b deutlich entnehmbar, dass die Rolle 28' sozusagen in die Lücke eintaucht. Dies führt zu sogenannten "Berg- und Talfahrten", durch die nach etwa 500 bis 800 Betriebsstunden die Laufflächen so ausgewaschen sind, dass die Kabine des mit der Gummikette versehenen Fahrzeugs nebst Fahrer ständigen Erschütterungen ausgesetzt ist. Des Weiteren lösen sich dadurch in regelmäßigen Abständen alle Schraubverbindungen, und diese müssen von Personal ständig kontrolliert werden. Außerdem werden die Fahrmotoren bezüglich der Hydraulik unnötig strapaziert und Dichtungen, Scheiben und vieles mehr verschleißt viel schneller.

Der Erfindung liegt daher die Aufgabe zugrunde, eine Traverse der eingangs genannten Art anzugeben, die ein möglichst erschütterungsfreies Fahren mit einer damit versehenen Gummikette ermöglicht.

Diese Aufgabe wird bei einer Traverse der eingangs genannten Art erfindungsgemäß dadurch gelöst, dass die ersten und zweiten Stirnflächen jeweils mindestens eine ebene Fläche aufweisen, deren Flächennormale quer zur Bewegungsrichtung der Gummibandfahrkette verläuft.

Der Kern der Erfindung besteht darin, dass aufgrund der Neigung der Flächennormalen quer zur Bewegungsrichtung eine Lücke zwischen zwei einander benachbarten Schienenstücken entsteht, die schräg zur Achse einer Rolle bzw. zu deren in Achsrichtung verlaufenden Mantellinie verläuft, so dass diese Rolle niemals in diese Lücke zwischen einander benachbarten Schienenstücken der Traversen eintauchen kann. Die Rolle ist daher zu jeder Fahrposition der Gummikette von mindestens einem Schienenstück abgestützt und es entsteht ein sogenannter fließender Übergang der Abstützung zwischen einander benachbarten Schienenstücken bezüglich der Rolle. Obwohl viele Neigungen der Flächennormalen denkbar sind, wird diese wohl üblicherweise mit der Bewegungsrichtung eine Ebene aufspannen, die im wesentlichen einen gleich bleibenden Abstand von der unteren Auflagefläche der Traverse aufweist.

Obwohl aus Gründen der einfachen Herstellung ein Schienenstück meist mit einer ersten und einer zweiten Stirnfläche ausgestattet sein wird, ist es dennoch denkbar, dass jede erste Stirnfläche mehrere ebene Flächen aufweist und die zweiten Stirnflächen dementsprechend ausgebildet sind. Denkbar wäre z.B. eine zusätzliche Stützfläche derart, dass bei dem ersten Ende des Schienenstücks eine Pfeilung vorhanden ist und bei dem entgegengesetzten Ende eine Negativkontur gleicher Pfeilung ausgeformt ist.

Des Weiteren wird die Herstellung auch noch dadurch erleichtert, dass die Flächennormalen die Bewegungsrichtung unter gleichem Winkel schneiden.

Damit die jeweils einander benachbarten Schienenstücke zweier nebeneinander angeordneten Traversen nicht gleichzeitig von der Rolle überbrückt werden müssen, ist es vorteilhaft, wenn die Enden mit den ersten Stirnflächen der Schienenstücke weiter über die Traverse hinausragen als die entgegengesetzten Enden. Das hat den zusätzlichen Vorteil, dass bei dem Zusammenbau der Gummikette nicht auf die genaue Ausrichtung der Traverse geachtet werden muß, da die Formen der in Draufsicht gesehenen Querschnitte zur Hochachse der Traverse punktsymmetrisch ausgebildet sind.

Gemäß einer Weiterbildung der Erfindung ist es daher vorgesehen, dass die Schienenstücke quer zur Bewegungsrichtung in Draufsicht gesehen einen parallelogrammartigen Querschnitt aufweisen.

Zur Erhöhung der Biegesteifigkeit der Traversen ist es vorteilhaft, wenn ausgehend von den Schienenstücken zu den jeweiligen freien Enden der Traverse Verstärkungsrippen angeordnet sind.

Da erfahrungsgemäß die größten Belastungen durch Drehmomente in der Mitte der Traverse auftreten, ist es vorteilhaft, wenn die Verstärkungsrippen zu den jeweiligen Enden der Traverse eine abnehmende Höhe aufweisen.

Die Lebensdauer der Traversen kann noch dadurch erhöht werden, dass die Angriffsflächen für ein Antriebszahnrad, die an dem Abschnitt angrenzend in Bewegungsrichtung weisend angeordnet sind, gehärtet ausgebildet sind.

Aus den gleichen Gründen ist es auch vorteilhaft, wenn die mit einer Rolle in Kontakt bringbaren Flächen der Schienenstücke gehärtet ausgebildet sind.

Damit eine noch festere Verbindung zwischen dem Gummi und der Traverse bei der Herstellung der Gummikette herstellbar ist, ist es vorteilhaft, wenn angrenzend an den freien Enden der Traverse Hohlräume ausgebildet sind.

Weitere Vorteile und Merkmale der Erfindung ergeben sich aus folgender Beschreibung eines Ausführungsbeispiels sowie aus den Figuren, auf die Bezug genommen wird. Es zeigen:
- Fig.1a:: eine Draufsicht auf zwei nebeneinander angeordneten Traversen nach dem Stand der Technik;
- Fig.1b:: eine Querschnittsansicht der Anordnung gemäß Fig.1a in Richtung der Pfeile A;
- Fig.2a:: eine Draufsicht auf zwei nebeneinander angeordneten Traversen gemäß der Erfindung;
- Fig.2b:: eine Querschnittsansicht gesehen entlang der Pfeile B von Fig.2a.;
- Fig.3:: eine Perspektivansicht der Anordnung gemäß Fig.2a.

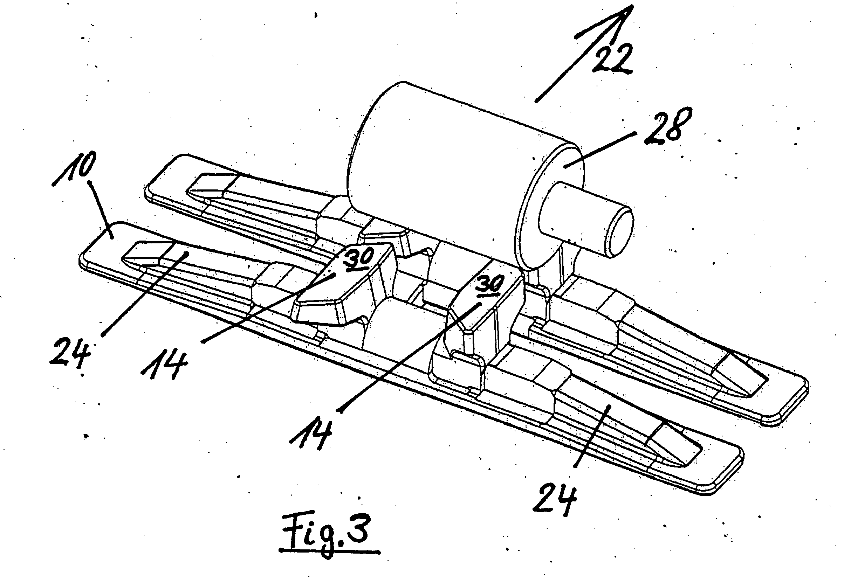

Anhand der Figuren 2a, 2b und 3 wird nunmehr ein Ausführungsbeispiel einer Traverse 10 näher beschrieben.

Diese Traverse 10 ist für eine Gummibandfahrkette gedacht und weist einen sich längs der Traverse 10 erstreckenden Abschnitt 12 auf. Dieser Abschnitt 12 wird von einem Paar quer zur Traverse 10 angeordneten Schienenstücken 14 begrenzt. Diese Schienenstücke 14 weisen erste 16 und zweite Stirnflächen 18 auf, von denen mindestens eine außerhalb des Längsrandes der Traverse 10 angeordnet ist. Bei den in den Fig. 2a, 2b und 3 gezeigten Ausführungsbeispielen sind diese herausragenden Stirnflächen die ersten Stirnflächen 16.

Im Gegensatz zu den in den Fig. 1a und 1b gezeigten Schienenstücken 14', weisen die Schienenstücke 14 gemäß der Erfindung, wie in den Fig.2a und 2b gezeigt, jeweils eine Fläche auf, deren Flächennormale 20 quer zur Bewegungsrichtung 22 der Gummibandfahrkette verläuft.

Obwohl auch andere Anordnungsmöglichkeiten vorhanden sind, weist das Ausführungsbeispiel der Traverse 10 gemäß Fig.2a eine Neigung der Flächennormalen 20 derart auf, dass die Bewegungsrichtung 22 und die Flächennormale 20 quasi auf der Blattebene der Fig.2a verlaufen. Das heißt also, die Flächennormale 20 und die Bewegungsrichtung 22 spannen eine Ebene auf, die in etwa parallel zur unteren Seite der Traverse 10 verläuft.

Obwohl in den Figuren nicht dargestellt, ist es möglich, dass die Schienenstücke 14 erste Stirnflächen 16 und zweite Stirnflächen 18 aufweisen, die jeweils aus mehreren Flächen zusammengesetzt sind.

Die Herstellung dieser Traversen 10 ist allerdings dann vereinfacht, wenn die ersten und zweiten Stirnflächen 16 und 18 jeweils aus einem Flächenabschnitt bestehen und sich die Flächennormalen 20 der jeweiligen Stirnflächen 16 oder 18 die Bewegungsrichtung 22 unter gleichem Winkel schneiden. Die einfachste Ausführung dazu besteht aus der gezeigten Form, bei der die Schienenstücke 14 in Draufsicht auf Fig. 2a gesehen, einen parallelogrammartigen Querschnitt aufweisen.

Dabei weisen jeweils die ersten Stirnflächen 16 über den Traversenrand weiter hinaus als die zweiten Stirnflächen 18.

Da bezüglich einer Traverse 10 die Schienenstücke 14 derart angeordnet sind, dass bei Betrachtung der Fig.2a die oberen Schienenstücke 14 eine erste Stirnfläche 16 aufweisen, die auf der Blattebene nach links weisen und die dazugehörigen Schienenstücke 14, die unterhalb der eben beschriebenen Schienenstücke 14 angeordnet sind, eine entgegengesetzte Ausrichtung haben, sind die Schienenstücke 14 einer Traverse 10 quasi punktsymmetrisch um den Mittelpunkt der Traverse angeordnet. Dies führt dazu, dass die Traverse 10 ohne Berücksichtigung einer bestimmten Ausrichtung bei der Montage eingesetzt werden kann.

Wie sich aus Fig.2b besonders anschaulich ergibt, berührt eine Rolle 28 immer ein Schienenstück 14 zweier nebeneinander angeordneter Traversen 10, so dass die Rolle 28 nicht mehr in eine Lücke zwischen den beiden einander zugeordneten Schienenstücken 14 zweier nebeneinander angeordneten Traversen eintauchen kann.

Des Weiteren weisen die Traversen 10 Verstärkungsrippen 24 auf, die ausgehend von den Schienenstücken 14 zu den jeweiligen freien Enden der Traverse 10 verlaufen. Bei dem gezeigten Ausführungsbeispiel sind die Verstärkungsrippen 24 so ausgeformt, dass sie zu den jeweiligen Enden der Traverse 10 eine abnehmende Höhe aufweisen.

Ferner sind Angriffsflächen 26 für ein nicht dargestelltes Antriebszahnrad gehärtet ausgebildet. Diese Angriffsflächen 26 sind an dem Abschnitt 12 angrenzend in Bewegungsrichtung 22 weisend zu beiden Seiten des Abschnitts 12 angeordnet.

Ebenfalls gehärtet ausgebildet sind mit der Rolle 28 in Kontakt bringbare Flächen 30 der Schienenstücke 14. Dies ist allerdings in den Figuren nicht erkennbar. Des Weiteren ist in den Figuren nicht gezeigt, dass angrenzend an den freien Enden der Traverse 10 Hohlräume ausgebildet sind, die eine bessere Verbindung zwischen der Traverse 10 und dem umgebenden Gummi ermöglichen.

Erfindungsgemäß ist es daher möglich, die Laufruhe drastisch zu verbessern und dadurch im Betrieb des Kettenfahrzeugs eine rüttelfreie Kabine zu schaffen. Ferner ist ein ständiges Kontrollieren der verschraubten Teile nicht mehr notwendig. Außerdem erreichen alle Lager und tragenden Teile eine höhere Lebensdauer.

### Bezugszeichenliste

- 10: Traverse
- 12: Abschnitt
- 14: Schienenstücke
- 16: erste Stirnfläche
- 18: zweite Stirnfläche
- 20: Flächennormale
- 22: Bewegungsrichtung
- 24: Verstärkungsrippe
- 26: Angriffsfläche
- 28: Rolle
- 30: Fläche

## Patentansprüche

1. Traverse (10) für eine Gummibandfahrkette, mit einem sich längs der Traverse (10) erstreckenden Abschnitt (12), der von einem Paar quer zu der Traverse (10) angeordneten Schienenstücken (14) begrenzt ist, welche erste (16) und zweite Stirnflächen (18) aufweisen, von denen mindestens eine außerhalb des Längsrandes der Traverse (10) angeordnet ist, **dadurch gekennzeichnet, dass** die ersten und zweiten Stirnflächen (16,18) jeweils mindestens eine ebene Fläche aufweisen, deren Flächennormale (20) quer zur Bewegungsrichtung (22) der Gummibandfahrkette verläuft.

2. Traverse (10) nach Anspruch 1, **dadurch gekennzeichnet, dass** jede erste Stirnfläche (16) mehrere ebene Flächen aufweist und die zweiten Stirnflächen (18) dementsprechend ausgebildet sind.

3. Traverse (10) nach Anspruch 1 oder 2, **dadurch gekennzeichnet, dass** die Flächennormalen (20) die Bewegungsrichtung (22) unter gleichem Winkel schneiden.

4. Traverse (10) nach einem der Ansprüche 1 bis 3, **dadurch gekennzeichnet, dass** die Enden mit den ersten Stirnflächen (16) der Schienenstücke (14) weiter über die Traverse (10) hinausragen als die entgegengesetzten Enden.

5. Traverse (10) nach einem der Ansprüche 1 bis 4, **dadurch gekennzeichnet, dass** die Schienenstücke (14) quer zur Bewegungsrichtung (22) in Draufsicht gesehen einen parallelogrammartigen Querschnitt aufweisen.

6. Traverse (10) nach einem der Ansprüche 1 bis 5, **dadurch gekennzeichnet, dass** ausgehend von den Schienenstücken (14) zu den jeweiligen freien Enden der Traverse (10) Verstärkungsrippen (24) angeordnet sind.

7. Traverse (10) nach Anspruch 6, **dadurch gekennzeichnet, dass** die Verstärkungsrippen (24) zu den jeweiligen Enden der Traverse (10) eine abnehmende Höhe aufweisen.

8. Traverse (10) nach einem der Ansprüche 1 bis 7, **dadurch gekennzeichnet, dass** die Angriffsflächen (26) für ein Antriebszahnrad, die an dem Abschnitt (12) angrenzend in Bewegungsrichtung (22) weisend angeordnet sind, gehärtet ausgebildet sind.

9. Traverse (10) nach einem der Ansprüche 1 bis 8, **dadurch gekennzeichnet, dass** die mit einer Rolle (28) in Kontakt. bringbaren Flächen (30) der Schienenstücke (14) gehärtet ausgebildet sind.

10. Traverse (10) nach einem der Ansprüche 1 bis 9, **dadurch gekennzeichnet, dass** angrenzend an den freien Enden der Traverse (10) Hohlräume ausgebildet sind.
